# EUROPÄISCHE PATENTSCHRIFT

(11) **EP 3 035 503 B1**
(45) Veröffentlichungstag und Bekanntmachung des Hinweises auf die Patenterteilung: **26.08.2020**
(21) Anmeldenummer: 14198182.9
(22) Anmeldetag: 16.12.2014
(51) Int. Cl.: H02K 7/102

(54) **Dynamoelektrische Maschine mit einer Bremse**
Dynamoelectric machine with a brake
Machine dynamoélectrique dotée d'un frein

(43) Veröffentlichungstag der Anmeldung: 22.06.2016
(73) Patentinhaber: Siemens Aktiengesellschaft, 80333 München (DE)
(72) Erfinder: Eckert, Frank, 97647 Hausen (DE)

(56) Entgegenhaltungen:
- EP-A2- 1 536 544
- DE-A1- 2 242 073
- DE-A1-102006 032 992

## Beschreibung

Die Erfindung betrifft eine dynamoelektrische Maschine mit einem Stator und einer um eine Achse drehbaren Welle, die mit einem Rotor drehfest verbunden ist, wobei zumindest an einer axialen Stirnseite des Rotors eine Bremse vorgesehen ist.

Dynamoelektrische Maschinen werden in ihrem dynamischen Betrieb häufig abgebremst und/oder im Stillstand definiert gehalten. Dazu sind speziell angeordnete Bremsen an den sich drehenden Teilen der dynamoelektrischen Maschine vorgesehen.

Die Rotoren der verdrehspielfreien Einbaubremsen, also die Bremsrotoren in diesen dynamoelektrischen Maschinen werden, wie die eigentlichen Rotoren der dynamoelektrischen Maschine mit einer starren Welle-Nabe-Verbindung auf der Motorwelle befestigt. Dadurch entsteht ein Zweimassenschwingsystem, das sich aus jeweils einem drehfest mit der Welle verbundenen Bremsenrotor und dem Rotor der dynamoelektrischen Maschine zusammensetzt. Dieses Zweimassenschwingsystem erzeugt unter bestimmten Bedingungen für den Motorbetrieb störende Resonanzschwingungen, die eine Lageregelung oder eine Antriebsregelung erschweren oder unmöglich machen.

Diese störenden Resonanzschwingungen können bisher lediglich durch eine Designänderung an der Welle, am Blechpaket des Rotors oder der Bremse vorgenommen werden, um somit diese Schwingungen in den normalen Betriebsfällen der dynamoelektrischen Maschine in unkritische Frequenzbereiche zu verschieben.

Nachteilig dabei ist der vergleichsweise hohe Aufwand, der u.a. aus einer Einzelfallbetrachtung der jeweiligen dynamoelektrischen Maschine und damit verbundenen Abhilfemaßnahmen resultiert.

DE 10 2006 032 992 A1 offenbart einen Rotor für eine elektrische Maschine, welcher eine Rotorwelle, ein Rotorpaket und einen Rotorbremskörper aufweist. Das Rotorpaket und der Rotorbremskörper sind axial beabstandet auf der Rotorwelle befestigt und unmittelbar drehfest miteinander verbunden.

EP 1 536 544 A2 offenbart einen Antriebsmotor für eine Fahrzeugkomponente, der einen Stator, einen Motorrotor und einen Bremsrotor, der als Teil des Motorrotors zum Bremsen der Fahrzeugkomponente ausgeführt ist, aufweist.

Ausgehend davon liegt der Erfindung die Aufgabe zugrunde, eine dynamoelektrische Maschine mit einer Bremse vorzusehen, die die oben genannten Nachteile vermeidet.

Die Lösung der gestellten Aufgabe gelingt durch eine dynamoelektrische Maschine mit den im Anspruch 1 angegebenen Merkmalen.

Durch den erfindungsgemäßen Aufbau der rotierenden Teile der dynamoelektrischen Maschine, also des Bremsrotors am Rotor dieser dynamoelektrischen Maschine wird nunmehr das Zweimassenschwingsystem eliminiert. Das Blechpaket des Rotors und der Bremsrotor sind in axialer und/oder radialer Richtung ebenso in Umfangsrichtung starr miteinander verbunden. Vorteilhafterweise wird damit auch der Gesamtaufbau von dynamoelektrischer Maschine und Bremse vergleichsweise kompakt.

Der Rotor muss dabei nicht zwangsläufig geblecht ausgeführt sein, er kann ebenso als gesintertes ein- oder mehrstückiges Teil ausgeführt sein.

In einfacher Art und Weise wird dabei der Bremsrotor am Blechpaket des Rotors der dynamoelektrischen Maschine durch in axial verlaufende Ausnehmungen des Rotors, insbesondere durch in axial verlaufende Ausnehmungen des Blechpakets des Rotors angeordneten Spreizdübel befestigt.

Damit entsteht lediglich eine kompakte Masse - Bremsrotor zusammen mit dem Rotor, die gebremst oder beschleunigt werden muss und somit bei wechselnden Betriebszuständen der dynamoelektrischen Maschine Schwingen vermeidet.

Eine Kopplung der beiden Massen, Bremsrotor und Rotor der dynamoelektrischen Maschine über die Welle, die damit zu Torsionsschwingungen angeregt werden kann, ist damit erfindungsgemäß vermieden. Bei hochdynamischen Vorgängen des Antriebs werden dabei Torsionsschwingungen der Welle aufgrund der beiden Massen vermieden, was die Regelung des Antriebs ermöglicht bzw. vereinfacht.

Durch die erfindungsgemäße Befestigung des Bremsrotors am Rotor über Einsatzelemente, wie Schrauben oder Bolzen, die eine Spreizung eines Zapfens in einer axialen Ausnehmung des Rotors bewirkt, entfällt auch ein Warmschrumpfen des Bremsrotors auf die Welle.

Ebenso sind auch andere normalerweise direkt auf der Welle positionierte Rotorelemente, wie Wuchtscheiben, Lüfterscheiben, Endbleche des Rotors, auf diese Art und Weise am Rotor zur Vermeidung von Torsionsschwingungen nunmehr direkt an der Stirnseite des Rotors der dynamoelektrischen Maschine befestigbar.

Die Erfindung sowie vorteilhafte Ausgestaltungen der Erfindung werden anhand von Beispielen näher erläutert. Darin zeigen:
- FIG 1: einen Teillängsschnitt des Anbaus der Bremse an einen Rotor der dynamoelektrischen Maschine,
- FIG 2: ein Spreizdübelsystem,
- FIG 3,4: eine perspektivische Darstellung eines Bremsrotors und
- FIG 5: einen Längsschnitt eines Bremsrotors.

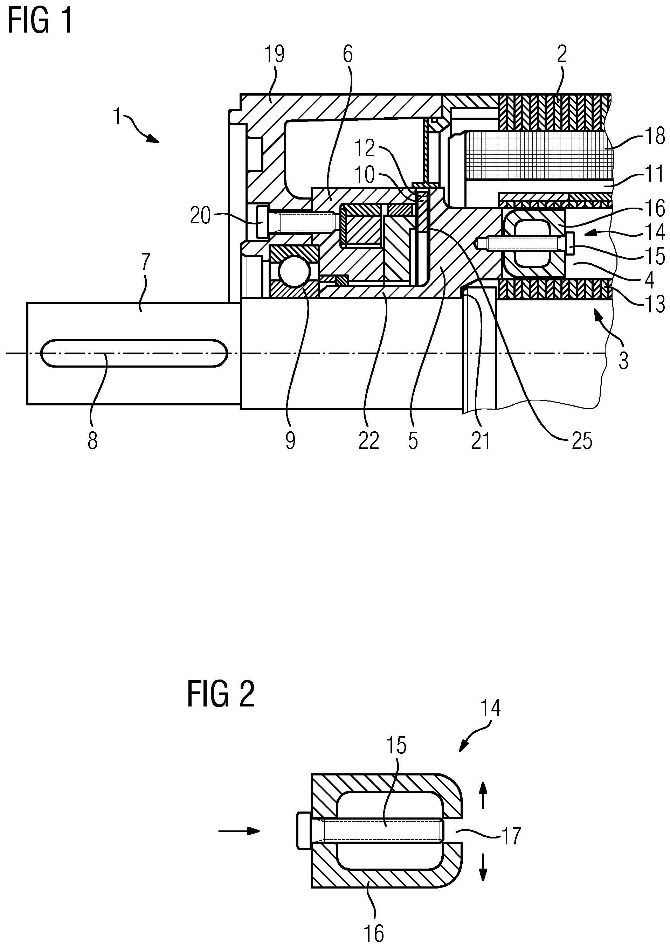

FIG 1 zeigt in einem Teillängsschnitt u.a. einen Rotor 3 einer dynamoelektrischen Maschine 1, der mit einer Welle 7 drehfest verbunden ist. Der Rotor 3 ist dabei um eine Achse 8 drehbar gelagert. An der einen Stirnseite des Rotors 3 befindet sich ein Bremsrotor 5 mit einer hülsenförmigen axialen Erstreckung 22, die vom Rotor 3 wegweist. Der Bremsrotor 5 ist mit dem Blechpaket 13 des Rotors 3 vorzugsweise über ein Spreizdübelsystem 14 ein- oder mehrteilig verbunden, was später im Detail noch ausgeführt wird.

FIG 1 zeigt außerdem in diesem Teillängsschnitt der dynamoelektrischen Maschine 1 einen Stator 2, der ein Wicklungssystem 18 aufweist, das mittels Zahnspulen oder gesehnten Spulen ausgebildet ist und sich in nicht näher dargestellten Nuten des Stators 2 befindet. Durch elektromagnetische Wechselwirkung des bestromten Wicklungssystems 18 des Stators 2 und dem Rotor 3 über den Luftspalt 11 der dynamoelektrischen Maschine 1 tritt eine Drehung des Rotors 3 um die Achse 8 auf.

Über eine Passfederverbindung der Welle 7 kann eine Arbeitsmaschine angeschlossen werden.

Die Welle 7 ist durch ein Lager 9 gehalten, das in einem Lagerschild 19 positioniert ist.

Der Rotor 3 ist ebenfalls durch axial geschichtete Bleche zu einem Blechpaket 13 aufgebaut, das drehfest mit der Welle 7 verbunden ist und axial verlaufende Ausnehmungen 4 aufweist. Dabei ist das Blechpaket vorzugsweise auf die Welle 7 warmgeschrumpft worden. Diese axialen Ausnehmungen 4 dienen u.a. der Aufnahme des Spreizdübelsystems 14, mit dem der Bremsrotor 5 direkt am Blechpaket des Rotors 3 gehalten wird.

Der Bremsrotor 5 zeigt außerdem in der Nähe der Welle 7 eine axiale hülsenförmige Erstreckung 22 in Richtung des Lagers 7, durch die sich eine Dichtfunktion zwischen Welle 7 und hülsenförmiger Erstreckung 22 einstellt. Dabei ist die hülsenförmige Erstreckung 22 aber mit der Welle 7 nicht drehfest verbunden ist, sondern weist ein Übermaß auf. In diesem durch Übermaß gebildeten Zwischenraum kann die Dichtfunktion auch durch eine labyrinthähnliche Gestaltung von Welle 7 und/oder hülsenförmiger Erstreckung 22 verbessert werden.

Ein Wellenanschlag 21 der Welle 7 erleichtert u.a. die Montage von Bremsrotor 5 und Rotor 3. Dabei kann ein vorgebbarer Spalt zwischen Stirnseite des Rotors 3 und Bremsrotor 5 vorbestimmt werden, so dass die axial verlaufenden Ausnehmungen - sofern nicht alle durch Spreizdübel belegt sind - auch der Kühlung des Rotors 3 und/oder des Bremsrotors 5 dienen.

Um eine Bremswirkung zu entfalten, ist an einem Bremskörper 6 oder am Bremsrotor 5 eine Bremsscheibe 10 an einer Fläche 25 angeordnet. Durch eine dementsprechende Arbeits- oder Ruhestromschaltung eines elektromagnetischen Systems, das im Bremskörper 6 angeordnet ist, schließt bzw. öffnet ein Bremsspalt 12 und führt somit u.a. zur Bremsung bzw. Fixierung des Stillstandes des Rotors 3. Der Bremskörper 6 ist mittels einer Befestigung 20 am Lagerschild 19 angeordnet.

FIG 2 zeigt als Beispiel, nicht Teil der beanspruchten Erfindung, in einer näheren Darstellung das Spreizdübelsystem 14, bei der eine Schraube 15 in einen Zapfen 16 eindrehbar ist. Aufgrund der Gestaltung des Zapfens 16 mittels Schlitzen 17 erfolgt bei Eindrehen der Schraube 15 eine Aufweitung der zumindest zwei Zapfenseiten. Durch Eindrehen der Schraube 15 - vorteilhafterweise über die Ausnehmung von der dem Bremsenrotor 5 abgewandten Seite des Rotors 3 - erfolgt eine Fixierung des Bremsrotors 5 am Rotor 3. Der Spreizdübel verkeilt sich dabei mit seinen sich aufweitenden Zapfenseiten bei Eindrehen der Schraube 5 in der Ausnehmung 4 des Rotors 3. Die Schraube 15 selbst greift in ein dafür vorgehendes Gewinde im Bremsrotor 5 ein.

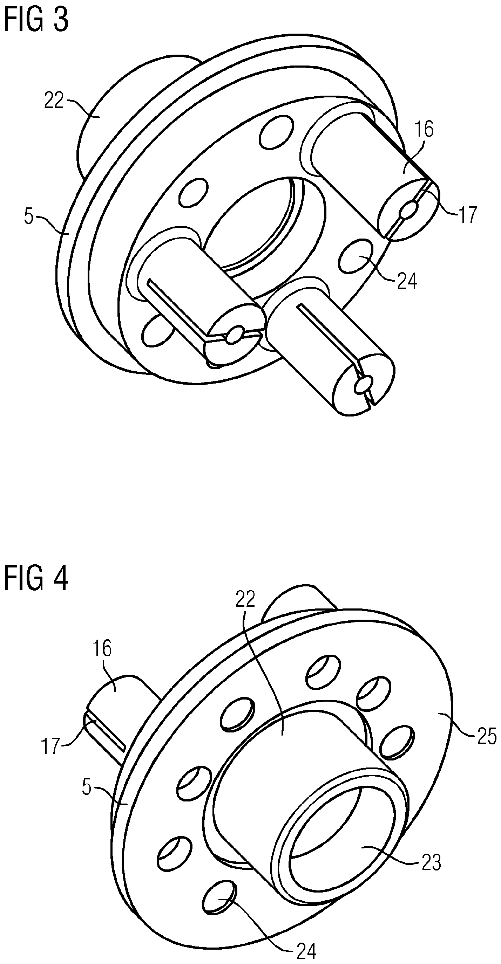

FIG 3 zeigt als Ausführungsbeispiel der beanspruchten Erfindung den Bremsrotor 5 in einer perspektivischen Darstellung. In dieser Ausführung des Bremsrotors 5 sind drei Zapfen 16 angeordnet. Im eingebauten Zustand des Bremsrotors 5 an die eine Stirnseite des Rotors 3 ragen diese drei Zapfen 16 in jeweils eine axial verlaufende Ausnehmung 4 des Rotors 3. Entgegen der Darstellung gemäß FIG 1 bilden hier Bremsrotor 5, Zapfen 16 und die axiale hülsenförmige Erstreckung 22 ein einteiliges Element. Die Zapfen 16 sind ebenfalls geschlitzt ausgeführt und weisen eine zentrale Bohrung auf. Der Bremsrotor 5 weist in Umfangsrichtung verteilt mehrere Öffnungen 24 auf, die vorzugsweise mit den axialen Ausnehmungen 4 des Rotors 3 korrespondieren. Dies erleichtert zum einen die Montage des Bremsrotors 5 an die Stirnseite des Rotors 3, und gestattet eine Kühlung des Rotors 3 über die verbleibenden axialen Öffnungen 24 bzw. Ausnehmungen 4, die nicht durch die Zapfen 16 belegt sind.

In einer weiteren perspektivischen Darstellung des Bremsrotors 5 nach FIG 3, zeigt FIG 4 die hülsenförmige axiale Erstreckung 22 des Bremsrotors 5. Ebenso sind die Umfangsrichtung verteilten Öffnungen 24 zu sehen, über die eine Schraube 15 zur Spreizung des Zapfens 16 einsetzbar ist.

Die Spreizung des Zapfens 16 kann somit grundsätzlich durch Eindrehen einer Schraube 15 oder Einsetzen eines Bolzens sowohl von der einen als auch von der anderen Seite des Bremsrotors 5 erfolgen.

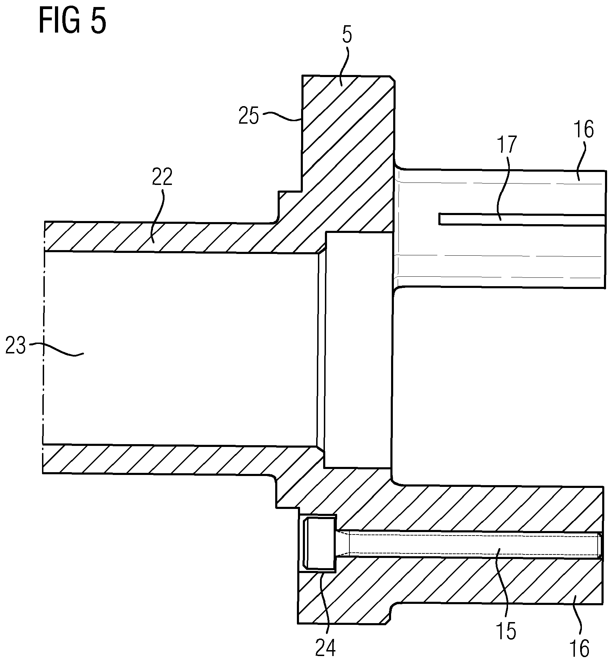

FIG 5 zeigt in einem Längsschnitt den Bremsrotor 5, der eine in einem Zapfen 16 befindliche Schraube 15 zeigt. In dieser Ausführung wird die Schraube 15 von der dem Rotor 3 abgewandten Seite eingesetzt. Die Spreizung des Zapfens 16 erfolgt durch Eindrehen der Schraube 15 in die Bohrung des Zapfens 16. An der Fläche 25 kann eine Bremsscheibe 10 positioniert werden, die - sofern notwendig - im Bereich der Öffnungen 24 in der Bremsscheibe 10 dazu korrespondierende Öffnungen aufweist.

Der Bremsrotor 5 wird also durch separate Spreizdübelvorrichtungen 14 gemäß FIG 1 und FIG 2 am Rotor 3 befestigt, wobei Einsatzelemente, wie Schrauben 15 oder Bolzen über die axialen Ausnehmungen 4 des Rotors 3 in den Zapfen 16 positioniert werden und dadurch eine Spreizung des Zapfens 16 erreichen, die eine Verkeilung in der axialen Ausnehmung 4 bewirkt. Alternativ dazu wird auch bei separaten Spreizdübelvorrichtungen 14 eine Verkeilung in der axialen Ausnehmung 4 des Rotors 3 erreicht, indem die Einsatzelemente, wie bei den einteiligen Ausführungen des Bremsrotors 5 beispielsweise nach FIG 5 von der dem Rotor 3 abgewandten Seite eingesetzt werden.

Auch bei dem einteiligen Bremsrotor 5, der einstückig hülsenförmige Erstreckung 22, den Bremsrotor 5 und die Zapfen 16 aufweist, kann eine Positionierung der Einsatzelemente, wie Schrauben 15 oder Bolzen von beiden Seiten des Bremsrotors 5 zur Fixierung am Rotor 3 erfolgen.

Derartige Bremsen für dynamoelektrische Maschinen 1 werden vor allem bei Werkzeugmaschinen und/oder Positionierantrieben für das Bereitstellen oder den Abtransport von Werkzeugen oder Werkstücken eingesetzt. Dort ist eine genaue Regelung der Antriebe notwendig, um vorgegebene Sicheranforderungen und Qualitätsanforderungen der hergestellten Produkte zu gewährleisten.

Selbstverständlich sind durch eine derartige Befestigungsweise - nicht nur Bremsrotoren 5 sondern auch andere Elemente wie Lüfterflügel, Ausgleichsmassen, Massen zur Erhöhung der Trägheit, Wuchtscheiben etc. am Rotor 3 zu befestigen, um auch dort die Problematik der Zweimassenschwinger zu beheben. Diese Elemente sind konstruktiv hinsichtlich ihrer Befestigung am Rotor 3 ebenso einteilig mit Zapfen 16 nach FIG 3, 4, 5 oder einem separaten Spreizdübelsystem 14 nach FIG 1 und FIG 2 ausgestattet.

## Patentansprüche

1. Dynamoelektrische Maschine (1), mit einem Stator (2) und einer um eine Achse (8) drehbaren Welle (7), die mit einem Rotor (3) drehfest verbunden ist, wobei zumindest an einer axialen Stirnseite des Rotors (3) eine Bremse (5,6,10) angeordnet ist, wobei die Bremse (5,6,10) einen lediglich axial verschiebbaren Bremsenkörper (6) und einen Bremsenrotor (5) aufweist, der mit dem Blechpaket (13) des Rotors (3) unmittelbar verbunden ist,
**dadurch gekennzeichnet, dass** der Bremsrotor (5) in Richtung des Rotors (3) zumindest abschnittsweise korrespondierend zu axialen Ausnehmungen (4) des Rotors (3) axial erstreckende Zapfen (16) aufweist, die zur axialen Aufnahme eines Einsatzelementes geeignet sind, wobei die axial erstreckenden Zapfen (16) Schlitze (17) aufweisen, die sich durch Positionieren des Einsatzelementes (15) in dem Zapfen (16) spreizen und sich somit in der Ausnehmung des Rotors (3) drehfest verkeilen und wobei der Bremsrotor (5) mit den Zapfen (16) einteilig ausgebildet ist.

2. Dynamoelektrische Maschine (1) nach Anspruch 1, **dadurch gekennzeichnet , dass** der Bremsrotor (5) axial an der Stirnseite des Rotors (3) befestigt ist.

3. Dynamoelektrische Maschine (1) nach Anspruch 2, **dadurch gekennzeichnet , dass** die Befestigung des Bremsrotors (5) am Rotor (3) durch zumindest eine Spreizvorrichtung erfolgt, die sich zumindest in der axialen Ausnehmung (4) des Blechpakets (13) des Rotors (3) verkeilt.

4. Dynamoelektrische Maschine (1) nach einem der vorhergehenden Ansprüche, **dadurch gekennzeichnet, dass** der Rotor (3) ein Blechpaket (13) aus axial geschichteten Blechen aufweist oder als gesintertes ein- oder mehrstückiges Teil ausgeführt ist.

5. Dynamoelektrische Maschine (1) nach einem der vorhergehenden Ansprüche, **dadurch gekennzeichnet, dass** die Befestigung des Bremsenrotors (5) am Rotor (3) über das Einsatzelement (15), die eine Spreizung des Zapfens (16) in einer axialen Ausnehmung des Rotors bewirkt, als Ersatz für ein Warmschrumpfen des Bremsrotors (5) auf der Welle (7) der dynamoelektrischen Maschine (1) vorgesehen ist.

6. Dynamoelektrische Maschine (1) nach einem der vorhergehenden Ansprüche,
**dadurch gekennzeichnet, dass** die Spreizung des Zapfens (16) durch Eindrehen einer Schraube (15) oder Einsetzen eines Bolzens sowohl von der einen als auch von der anderen Seite des Bremsrotors (5) durchführbar ist.

7. Dynamoelektrische Maschine (1) nach einem der vorhergehenden Ansprüche,
**dadurch gekennzeichnet, dass** der Bremsrotor (5), die Zapfen (16) und eine axiale hülsenförmige Erstreckung (22) ein einteiliges Element bilden.

8. Dynamoelektrische Maschine (1) nach einem der vorhergehenden Ansprüche,
**dadurch gekennzeichnet, dass** die Zapfen (16) geschlitzt ausgeführt und eine zentrale Bohrung aufweisen.

9. Dynamoelektrische Maschine (1) nach einem der vorhergehenden Ansprüche,
**dadurch gekennzeichnet, dass** der Bremsrotor (5) in Umfangsrichtung verteilt mehrere Öffnungen (24) aufweist, die mit den axialen Ausnehmungen (4) des Rotors (3) korrespondieren.

10. Dynamoelektrische Maschine (1) nach einem der vorhergehenden Ansprüche,
**dadurch gekennzeichnet, dass** der Bremsrotor (5) einteilig ausgebildet ist und einstückig eine hülsenförmige Erstreckung (22) und die Zapfen (16) aufweist.

11. Dynamoelektrische Maschine (1) nach einem der vorhergehenden Ansprüche,
**dadurch gekennzeichnet, dass** eine Positionierung der Einsatzelemente (15) von beiden Seiten des Bremsrotors (5) zur Fixierung am Rotor (3) durchführbar ist.

12. Dynamoelektrische Maschine (1) nach einem der vorhergehenden Ansprüche,
**dadurch gekennzeichnet, dass** das Einsatzelement eine Schraube (15) oder ein Bolzen ist.

13. Werkzeugmaschine oder Positionierantrieb mit einer dynamoelektrischen Maschine (1) nach einem der vorhergehenden Ansprüche 1 bis 12.

## Claims

1. Dynamo-electric machine (1) having a stator (2) and a shaft (7) which can be rotated about an axis (8), said shaft being connected to a rotor (3) in a torsion-resistant manner, wherein a brake (5, 6, 10) is arranged at least on one axial front side of the rotor (3), wherein the brake (5, 6, 10) has a solely axially displaceable brake body (6) and a brake rotor (5), which is directly connected to the laminated core (13) of the rotor (3),
**characterised in that**
the brake rotor (5) has axially extending pivots (16) in the direction of the rotor (3) at least in sections corresponding to axial recesses (4) of the rotor (3), said pivots being suited to axially receiving an element, wherein the axially extending pivots (16) have slots (17) which spread by positioning the element in the pivot (16) and thus wedge together in the recess of the rotor (3) in a torsion-resistant manner and wherein the brake rotor (5) is embodied in one piece with the pivots (16).

2. Dynamo-electric machine (1) according to claim 1,
**characterised in that** the brake rotor (5) is mounted axially on the front side of the rotor (3).

3. Dynamo-electric machine (1) according to claim 2,
**characterised in that** the mounting of the brake rotor (5) on the rotor (3) takes place by means of at least one spreading apparatus, which becomes wedged together at least in the axial recess (4) of the laminated core (13) of the rotor (3).

4. Dynamo-electric machine (1) according to one of the preceding claims, **characterised in that** the rotor (3) has a laminated core (13) comprising axially layered sheets or is embodied as a sintered single-piece or multi-piece part.

5. Dynamo-electric machine (1) according to one of the preceding claims, **characterised in that** the mounting of the brake rotor (5) on the rotor (3) by way of the element (15), which effects a spreading of the pivot (16) in an axial recess of the rotor, is provided as a replacement for a heat-shrinking of the brake rotor (5) on the shaft (7) of the dynamo-electric machine (1).

6. Dynamo-electric machine (1) according to one of the preceding claims, **characterised in that** the spreading of the pivot (16) can be carried out by screwing in a screw (15) or inserting a bolt both from the one side and also from the other side of the brake rotor (5).

7. Dynamo-electric machine (1) according to one of the preceding claims, **characterised in that** the brake rotor (5), the pivots (16) and an axial sleeve-shaped extension (22) form a single-piece element.

8. Dynamo-electric machine (1) according to one of the preceding claims, **characterised in that** the pivots (16) are embodied to be slotted and have a central borehole.

9. Dynamo-electric machine (1) according to one of the preceding claims, **characterised in that** the brake rotor (5) has a number of openings (24) which are distributed in the peripheral direction and which correspond to the axial recesses (4) of the rotor (3).

10. Dynamo-electric machine (1) according to one of the preceding claims,
**characterised in that** the brake rotor (5) is embodied in one piece and has a sleeve-shaped extension (22) and the pivots (16) in one piece.

11. Dynamo-electric machine (1) according to one of the preceding claims, **characterised in that** a positioning of the elements (15) can be carried out from both sides of the brake rotor (5) in order to fix to the rotor (3).

12. Dynamo-electric machine (1) according to one of the preceding claims, **characterised in that** the element is a screw (15) or a bolt.

13. Machine tool or positioning drive with a dynamo-electric machine (1) according to one of the preceding claims 1 to 12.

## Revendications

1. Machine (1) dynamoélectrique, ayant un stator (2) et un arbre (7) tournant autour d'un axe (8), qui est solidaire en rotation d'un rotor (3), dans lequel un frein (5, 6, 10) est monté au moins sur un côté frontal axial du rotor (3), le frein (5, 6, 10) ayant un corps (6) de frein coulissant seulement axialement et un rotor (5) de frein, qui est relié directement au paquet (13) de tôles du rotor (3),
**caractérisée en ce que** le rotor (5) du frein a, dans la direction du rotor (3), des tourillons (16), qui s'étendent axialement, au moins par endroit, en correspondance avec des évidements (4) axiaux du rotor (3) et qui sont propres à recevoir axialement un élément d'insertion, les tourillons (16) s'étendant axialement ayant des fentes (17), qui, par la mise en position de l'élément (15) d'insertion dans le tourillon (16), s'écartent et se coincent ainsi solidairement en rotation dans l'évidement du rotor (3) et dans lequel le rotor (5) de frein est constitué d'une seule pièce avec les tourillons (16).

2. Machine (1) dynamoélectrique suivant la revendication 1,
**caractérisée en ce que** le rotor (5) du frein est fixé axialement au côté frontal du rotor (3).

3. Machine (1) dynamoélectrique suivant la revendication 2,
**caractérisée en ce que** la fixation du rotor (5) du frein au rotor (3) s'effectue par au moins un système d'écartement, qui se coince au moins dans l'évidement (4) axial du paquet (13) de tôles du rotor (3).

4. Machine (1) dynamoélectrique suivant l'une des revendications précédentes, **caractérisée en ce que** le rotor (3) a un paquet (13) de tôles feuilletées axialement ou est réalisé sous la forme d'une partie frittée en une pièce ou en plusieurs pièces.

5. Machine (1) dynamoélectrique suivant l'une des revendications précédentes, **caractérisée en ce que** la fixation du rotor (5) du frein au rotor (3), par l'élément (15) d'insertion, qui provoque un écartement du tourillon (16) dans un évidement axial du rotor, est prévue en remplacement d'un rétreint à chaud du rotor (5) de frein sur l'arbre (7) de la machine (1) dynamoélectrique.

6. Machine (1) dynamoélectrique suivant l'une des revendications précédentes,
**caractérisée en ce que** l'écartement du tourillon (16) peut être effectué en faisant tourner une vis (15) ou en insérant un boulon, tant d'un côté qu'également de l'autre côté du rotor (5) de frein.

7. Machine (1) dynamoélectrique suivant l'une des revendications précédentes,
**caractérisée en ce que** le rotor (5) du frein, les tourillons (16) et une étendue (22) axiale en forme de manchon forment un élément d'une seule pièce.

8. Machine (1) dynamoélectrique suivant l'une des revendications précédentes,
**caractérisée en ce que** les tourillons sont fendus et ont un trou central.

9. Machine (1) dynamoélectrique suivant l'une des revendications précédentes,
**caractérisée en ce que** le rotor (5) du frein a plusieurs ouvertures (24), qui sont réparties dans la direction du pourtour et qui correspondent aux évidements (4) axiaux du rotor (3).

10. Machine (1) dynamoélectrique suivant l'une des revendications précédentes,
**caractérisée en ce que** le rotor (5) du frein est constitué d'une seule pièce et a, d'une seule pièce, une étendue (22) en forme de manchon et les tourillons (16),

11. Machine (1) dynamoélectrique suivant l'une des revendications précédentes,
**caractérisée en ce qu'**une mise en position des éléments (15) d'insertion peut s'effectuer, pour l'immobilisation sur le rotor (3), des deux côtés du rotor (5) du frein.

12. Machine (1) dynamoélectrique suivant l'une des revendications précédentes,
**caractérisée en ce que** l'élément d'insertion est une vis (15) ou un boulon.

13. Machine-outil ou entraînement de mise en position, comprenant une machine (1) dynamoélectrique suivant l'une des revendications précédentes 1 à 12.
